# FASCICULE DE BREVET EUROPEEN

(11) **EP 3 151 990 B1**
(45) Date de publication et mention de la délivrance du brevet: **20.02.2019**
(21) Numéro de dépôt: 15726161.1
(22) Date de dépôt: 02.06.2015
(51) Int. Cl.: B22C 9/22, B22D 18/02, B22D 18/06, B22D 19/02, B22D 21/00, B22D 25/06, B32B 5/26, B64D 29/08, D06M 11/83, C22C 47/12, C22C 49/14, C22C 47/06, B22D 17/22, B22C 9/06, C22C 49/06, C22C 49/04, B22D 27/11, B22D 19/14

(54) **PROCEDE DE FABRICATION D'UNE PIECE DANS UN MATERIAU COMPOSITE A MATRICE METALLIQUE ET OUTILLAGE ASSOCIE**
VERFAHREN ZUR HERSTELLUNG EINES TEILS AUS EINEM METALL-MATRIX-VERBUNDSTOFF UND ZUGEHÖRIGE VORRICHTUNG
METHOD FOR MANUFACTURING A PART OUT OF A METAL MATRIX COMPOSITE MATERIAL, AND RELATED DEVICE

(30) Priorité: 03.06.2014 FR 1455038
(43) Date de publication de la demande: 12.04.2017
(73) Titulaire: Safran Electronics & Defense SAS, 92100 Boulogne-Billancourt (FR); SAFRAN, 75015 Paris (FR)
(72) Inventeur: SABAH, Muriel, 92100 Boulogne-Billancourt (FR); MAISONNAVE, Nicolas, 75015 Paris (FR)
(74) Mandataire: Regimbeau
(86) Numéro de dépôt international: PCT/EP2015/062305
(87) Numéro de publication internationale: WO 2015/185578

(56) Documents cités:
- EP-A2- 0 164 536
- EP-A2- 2 474 638
- WO-A1-2005/097377
- DE-A1-102012 011 264
- GB-A- 1 359 554
- US-A- 4 653 569

## Description

### DOMAINE DE L'INVENTION

L'invention concerne un procédé de fabrication d'une pièce dans un matériau composite comprenant un renfort fibreux densifié par une matrice métallique, notamment dans le domaine de l'aéronautique.

### ARRIERE-PLAN TECHNOLOGIQUE

De nos jours, il est nécessaire de respecter des exigences environnementales très élevées qui sont difficiles à concilier avec des exigences en matière de sécurité, ce qui implique souvent une augmentation non négligeable de la masse et du coût de fabrication des pièces concernées. Cependant, il s'avère difficilement envisageable de réaliser des pièces à un coût trop élevé, même si celles-ci présentent les propriétés mécaniques, thermiques et électriques requises.

Par exemple, dans le domaine de l'aéronautique, les boîtiers avioniques contenant de l'électronique de puissance sont soumis à des environnements très sévères en température et en vibrations qui nécessitent de bonnes transmissions d'énergie (mécanique, thermique et électrique). Ces boîtiers sont donc généralement réalisés en aluminium car ce matériau présente à la fois une faible densité et une bonne conductivité thermique. Cependant, l'aluminium ne suffit pas à évacuer l'intégralité des calories générées par l'électronique de puissance, de sorte qu'il s'avère nécessaire d'équiper le boîtier de systèmes de refroidissement supplémentaires comprenant des plaques de refroidissement, des dissipateurs et/ou des caloducs, qui augmentent la masse globale du boîtier et réduisent drastiquement son rendement face aux contraintes environnementales.

Il a déjà été proposé d'utiliser des matériaux composites afin de combiner les propriétés avantageuses de plusieurs matériaux différents et d'améliorer la masse et/ou le coût de fabrication des différentes pièces réalisées dans ces matériaux.

Par exemple, dans le domaine de l'aéronautique, il a été proposé de réaliser des carters de soufflante dans un matériau composite à renfort fibreux densifié par une matrice polymère. Les pièces ainsi obtenues sont à la fois légères et mécaniquement résistantes. Toutefois, ce type de matériau n'est pas conducteur et résiste difficilement aux environnements sévères en température, en raison de la composition polymérique de la matrice. Ce type de matériau composite ne peut donc être envisagé pour la fabrication de pièces nécessitant une bonne conductivité thermique et électrique telles que les boîtiers avioniques.

Dans le domaine spatial, il a été proposé de réaliser des matériaux composites comprenant un renfort densifié par une matrice métallique (connus sous l'acronyme C3M, pour matériaux composites à matrice métallique). La matrice métallique peut alors comprendre un métal pur ou un alliage, tandis que le renfort peut comprendre des fibres ou encore des mousses à porosité ouverte.

Afin d'obtenir ces matériaux composites à matrice métallique, il est connu d'infiltrer la matrice métallique sous pression sous forme liquide (fondue) dans le renfort dans une enceinte hyperclave. Selon cette technique, on place dans l'enceinte un moule comprenant une préforme fibreuse et un creuset contenant des blocs du métal destiné à former la matrice de la pièce. On fait alors le vide à l'intérieur de l'enceinte et du moule, on chauffe le creuset contenant les blocs métalliques et on préchauffe le moule. Lorsque l'alliage contenu dans le creuset est totalement fondu, il est transféré à l'intérieur du moule. Ce transfert est effectué automatiquement en pressurisant l'enceinte à un niveau de pression généralement compris entre environ 30 bars et environ 100 bars. Dès que le moule est rempli, le refroidissement de la pièce est accéléré en amenant un organe réfrigérant au contact d'une paroi du moule. Tant que la température n'est pas descendue en dessous de la température de solidification de l'alliage, la pression est maintenue dans le récipient afin de compenser le rétreint naturel du métal.

Ce procédé permet alors d'obtenir un matériau composite présentant une grande stabilité dimensionnelle et d'excellentes propriétés mécaniques, thermiques et électriques (suivant les matériaux choisis pour le renfort fibreux et la matrice métallique). Toutefois, il est extrêmement complexe à mettre en oeuvre et très consommateur en termes d'énergie, de temps de fabrication et de coût, ce qui le rend difficilement industrialisable à grande échelle en dehors du domaine spatial.

Dans le document EP 0 164 536, il a été proposé de fabriquer un objet de forme allongée comprenant un matériau composite formé de fibres de carbone et une matrice métallique à base de magnésium. A cet effet, un faisceau de fibres parallèles de carbone à haute résistance est introduit dans une enceinte allongée en acier inoxydable, préchauffé à environ 700°C et placé dans la cavité d'un moule de fonderie sous pression préchauffé à environ 200°C, de telle sorte que l'ouverture de l'enceinte soit orientée vers le haut. L'alliage de magnésium fondu est ensuite versé dans la cavité, à environ 700°C, puis un piston, également préchauffé à environ 200°C, est enfoncé sur le haut du moule, afin de comprimer l'alliage fondu et le forcer à pénétrer dans le faisceau de fibres, lors du refroidissement de l'appareil. Après remontée du piston, la pièce solidifiée est extraite vers le haut par un poussoir. La pièce finale est obtenue par un usinage au cours duquel l'enceinte est éliminée.

Toutefois, dans ce document, les pièces obtenues présentent nécessairement une direction principale s'étendant selon l'axe de compression du piston. Par ailleurs, la forme des pièces est limitée à une forme allongée et il s'avère nécessaire d'appliquer un effort très important sur le piston (de l'ordre de 1500 bars) afin d'infiltrer l'alliage métallique dans les fibres de carbone. Enfin, ce procédé requiert une étape longue et fastidieuse d'usinage afin de retirer l'alliage métallique et l'enceinte en acier autour du matériau composite ainsi obtenu.

Le document EP 2 474 638 décrit un procédé de fabrication d'une aube dans un matériau composite comprenant un renfort fibreux densifié par une matrice aluminium-lithium. Le renfort fibreux est placé dans une enceinte et un alliage d'aluminium-lithium est fondu et introduit dans l'enceinte à l'aide d'un piston.

Le document DE 10 2012 011264 décrit l'application d'un revêtement métallique (par immersion, pulvérisation ou impression par exemple) sur un renfort fibreux.

Le document US 4 653 569 décrit un procédé de fabrication d'une pièce dans un matériau composite comprenant un renfort fibreux densifié par une matrice métallique dans lequel on place un renfort fibreux dans un outillage, on introduit du métal fondu dans l'outillage, on comprime l'ensemble afin d'extraire le surplus de métal, on fermer l'outillage puis on comprime l'ensemble pour obtenir la pièce.

Le document GB 1 359 554 décrit un procédé de fabrication d'une pièce dans un matériau composite comprenant un renfort fibreux densifié par une matrice métallique dans lequel on fait couler du métal fondu sur un empilement de renforts fibreux puis on comprime l'ensemble pour former la pièce.

### RESUME DE L'INVENTION

Un objectif de l'invention est de proposer un nouveau matériau composite à matrice métallique pouvant être utilisé notamment dans le domaine de l'aéronautique, qui présente de meilleures performances électriques et thermiques et une meilleure densité que l'aluminium ou que le magnésium monolithiques tout en ayant des performances mécaniques équivalentes, et ce pour un coût raisonnable.

Un autre objectif de l'invention est de proposer une pièce dans un nouveau matériau composite à matrice métallique, qui combine les caractéristiques mécaniques, thermiques et électriques de plusieurs matériaux, qui puisse être réalisée facilement et rapidement pour un coût raisonnable, et qui puisse le cas échéant subir des opérations ultérieures de finition telles que de l'usinage et autres assemblages tels du soudage, rivetage etc..

Pour cela, l'invention propose un procédé de fabrication de fabrication d'une pièce dans un matériau composite comprenant un renfort fibreux densifié par une matrice métallique, par exemple d'une pièce d'un moteur aéronautique, le procédé de fabrication comprenant les étapes suivantes :
- ouvrir un outillage comprenant une partie support et une partie moulante, en écartant la partie moulante de la partie support afin de délimiter avec la partie support un logement,
- placer un renfort fibreux dans le logement de l'outillage,
- fermer de façon étanche l'outillage, en fixant la partie moulante sur la partie support et en ménageant un espace entre le renfort fibreux et les parties de l'outillage,
- faire fondre la matrice métallique,
- introduire du métal fondu dans l'outillage de manière à remplir l'espace entre le renfort fibreux et les parties d'outillage,
- appliquer un effort sur la partie moulante et/ou sur la partie support de manière à rapprocher la partie moulante et la partie support et réduire l'espace entre le renfort fibreux et les parties de l'outillage, pour imprégner le renfort fibreux avec le métal fondu.

Certaines caractéristiques préférées mais non limitatives du procédé de fabrication décrit ci-dessus sont les suivantes :
- la partie support et/ou la partie moulante sont préchauffés à une température de préchauffage inférieure ou égale à la température de fusion de la matrice métallique,
- la partie support et/ou la partie moulante sont préchauffées à une température comprise entre environ 200°C et 600°C,
- la partie support et/ou la partie moulante sont préchauffées, la partie moulante étant préchauffée à une température supérieure à la température de la partie support,
- le procédé comprend en outre une étape au cours un grillage métallique est placé entre la partie support et le renfort fibreux et/ou entre la partie moulante et le renfort fibreux, préalablement à la fermeture de l'outillage,
- le procédé comprend en outre une étape de traitement du renfort fibreux adapté pour accroître la perméabilité des fibres formant le renfort fibreux,
- l'étape de prétraitement comprend une étape de désensimage des fibres formant le renfort fibreux et une étape de traitement chimique par sel de fluorure, par dépôt de carbure ou par dépôt de nickel, et
- l'étape de remplissage de l'espace entre le renfort fibreux et les parties de l'outillage et/ou l'étape d'imprégnation du renfort fibreux avec la matrice métallique sont réalisées sous vide.

Selon un troisième aspect, l'invention propose également un outillage pour la fabrication d'une pièce comme décrite ci-dessus, comprenant :
- un moule, le moule comprenant :
   * une partie support,
   * une partie moulante, mobile par rapport à la partie support afin de délimiter avec la partie support un logement adapté pour recevoir un renfort fibreux,
   * un organe d'étanchéité, disposé entre la partie support et la partie moulante, adapté pour étanchéifier le moule lorsque la partie moulante est fixée sur la partie support tout en ménageant un espace entre le renfort fibreux et les parties de l'outillage, et
   * un orifice traversant, formé dans la partie moulante ou dans la partie support du moule et débouchant dans le logement, ledit orifice traversant étant adapté pour permettre l'introduction d'un métal fondu dans le logement, et
- un actionneur, configuré pour appliquer un effort sur la partie moulante et/ou sur la partie support du moule de manière à rapprocher la partie moulante et la partie support et réduire l'espace entre le renfort fibreux et les parties de l'outillage, pour imprégner le renfort fibreux avec le métal fondu.

Selon un quatrième aspect, l'invention propose enfin un moule pour un outillage comme décrit ci-dessus caractérisé en ce qu'il comprend :
- une partie support,
- une partie moulante, mobile par rapport à la partie support afin de délimiter avec la partie support un logement adapté pour recevoir un renfort fibreux,
- un organe d'étanchéité, disposé entre la partie support et la partie moulante, adapté pour étanchéifier l'outillage lorsque la partie moulante est fixée sur la partie support tout en ménageant un espace entre le renfort fibreux et les parties de l'outillage, et
- un orifice traversant, formé dans la partie moulante ou dans la partie support et débouchant dans le logement, ledit orifice traversant étant adapté pour permettre l'introduction d'un métal fondu dans le logement.

Suivant une caractéristique préférée mais non limitative, le moule peut en outre comprendre un évent débouchant dans le logement et configuré pour être mis en communication fluidique avec une pompe à vide.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 illustre un exemple d'outillage conforme à un mode de réalisation de l'invention, et

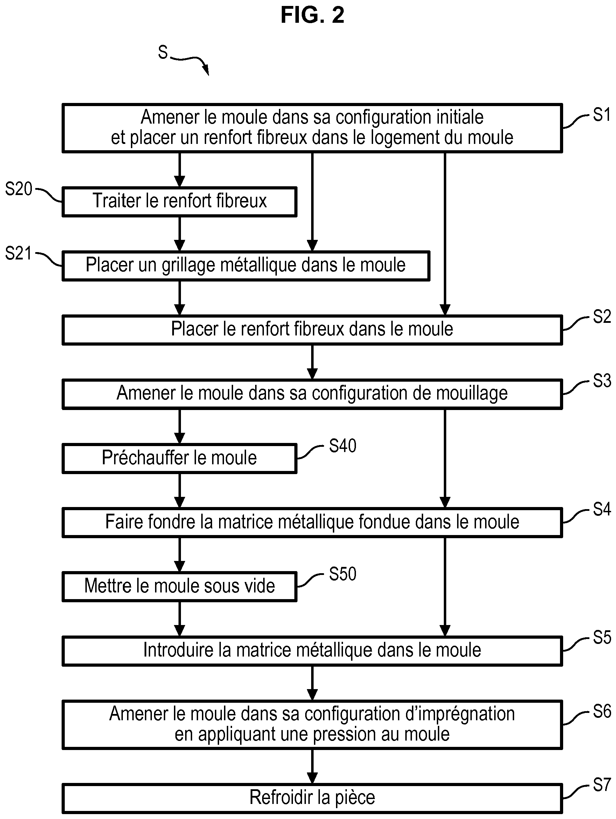

La figure 2 est un organigramme représentant différentes étapes d'un exemple de réalisation du procédé de fabrication conforme à l'invention.

### DESCRIPTION DETAILLEE D'UN MODE DE REALISATION

Dans ce qui suit, l'invention sera plus particulièrement décrite dans son application pour la fabrication d'une pièce 1 de turbomachine, typiquement d'un boîtier d'avionique, d'une plaque de dissipation pouvant être utilisée dans un tel boîtier afin d'améliorer les échanges thermiques et le refroidissement du boîtier, ou encore d'un renfort métallique pour un bord d'attaque d'une aube de turbomachine, configuré pour protéger le bord d'attaque de cette aube contre les contraintes mécaniques et thermiques qu'elle subit lors du fonctionnement de la turbomachine.

Ceci n'est cependant pas limitatif, dans la mesure où l'invention s'applique à toute pièce 1 pouvant être obtenue dans un moule 12 par fonderie, quelle que soit sa forme (plane, convexe, concave, etc.) ou son utilisation, dans la mesure où ladite pièce 1 comprend un matériau composite comprenant un renfort fibreux 2 densifié par une matrice métallique 3.

Par matériau composite, on comprendra ici un matériau comprenant un renfort fibreux 2 densifié par une matrice métallique 3.

Le renfort fibreux 2 peut comprendre tout type de fibres adaptées à l'utilisation envisagée pour la pièce 1. Par exemple, dans le cas d'une pièce 1 destinée à subir un environnement sévère en températures, les fibres sont de préférence choisies de manière à supporter de telles températures. Il pourra notamment s'agir dans cet exemple de tout type de fibres à l'exclusion des fibres naturelles.

Par exemple, dans le cas d'une pièce 1 de turbomachine, les fibres peuvent comprendre des fibres synthétiques telles que des fibres de carbone (par exemple des fibres de carbone à haut module de conductivité thermique telles que les fibres de type Pitch (précursseur), des fibres de verre, des fibres d'aramide, des fibres de bore, des fibres de kevlar.

Le renfort fibreux 2 peut être tissé en deux dimensions, tissé en trois dimensions, tressé en deux dimensions, tressé en trois dimensions et/ou stratifié (empilement de plis de fibres).

Afin d'améliorer la tenue mécanique de la pièce 1, les fibres du renfort fibreux 2 présentent de préférence une perméabilité suffisante pour garantir une bonne imprégnation de l'alliage métallique 3. Cette perméabilité des fibres peut notamment être caractérisée par leur angle de mouillage. Dans une forme de réalisation, l'angle de mouillage est proche de 0°, par exemple entre 0° et 60°. Par exemple, un angle de mouillage de l'ordre de 40° à 50° permet déjà d'assurer une bonne imprégnation des fibres.

Le cas échéant, lorsque les fibres ne présentent pas une perméabilité suffisante pour assurer une bonne infiltration de l'alliage métallique 3 dans le renfort fibreux 2, il est possible de leur faire subir un traitement préalable afin d'augmenter leur perméabilité. Ce traitement peut comprendre tout d'abord une étape au cours de laquelle les fibres sont désensimées en les chauffant à une température de l'ordre de 500°C. Selon le type de fibres, la perméabilité peut rester insuffisante, malgré cette étape de désensimage. Par exemple, les fibres peuvent encore présenter un angle de mouillage de l'ordre de 150°. Dans ce cas, pour augmenter encore davantage le niveau de perméabilité des fibres et atteindre des angles de mouillage adaptés, typiquement de 40° à 50°, des traitements chimiques par sel de fluorure ou par dépôt de carbure ou de nickel peuvent être ajoutés aux fibres préalablement désensimées.

Par ailleurs, la matrice métallique 3 peut comprendre tout type d'alliage adapté à l'utilisation envisagée pour la pièce 1. Ainsi, pour une pièce 1 nécessitant à la fois une excellente tenue en température en environnement sévère, une bonne tenue mécanique et une bonne conductivité électrique pour un faible encombrement, un poids réduit et un coût modéré, la matrice métallique 3 peut comprendre un alliage à base d'aluminium et/ou un alliage à base de magnésium. Ce type d'alliage peut notamment être adapté pour une plaque de dissipation ou pour un boîtier d'avionique comme décrits ci-dessus.

D'autres types d'alliages métalliques pouvant être utilisés. Ces alliages peuvent notamment comprendre les métaux pouvant être utilisés pour le moulage en sable, les métaux de fonderie (tels que la fonte et l'acier), les métaux pouvant être utilisés pour le moulage en coquille (par gravité, sous pression ou à la cire perdue) dont le point de fusion est inférieur à 900°C (alliages cuivreux, d'aluminium, de zinc, etc.).

### Outillage 10

Le procédé S peut être mis en oeuvre à l'aide d'un outillage 10 adapté, comprenant un moule 12 ayant une partie support - ou matrice 14 - et une partie moulante - ou poinçon 13. Le poinçon 13 est mobile par rapport à la matrice 14 afin de délimiter avec celle-ci un logement 15 adapté pour recevoir un renfort fibreux 2. Dans une forme de réalisation, les faces en regard de la matrice 14 et du poinçon 13 forment le logement 15 et coopèrent pour conformer la pièce 1 dans le moule 12.

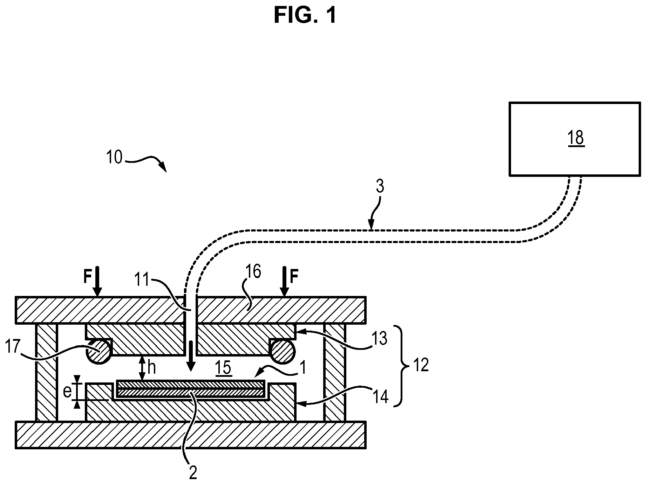

Le moule 12 comprend en outre un orifice traversant 11, formé dans le poinçon 13 ou la matrice 14 et débouchant dans le logement 15, pour permettre l'introduction d'un alliage métallique 3 fondu dans le logement 15. Dans l'exemple de réalisation illustré sur la figure 1, l'orifice traversant 11 est formé dans le poinçon 13.

Afin de permettre la fabrication d'une pièce 1 en matériau composite, le moule 12 présente :
- une configuration initiale, dans laquelle le poinçon 13 est séparé de la matrice 14 de manière à permettre l'accès au logement 15.
- une configuration de mouillage, dans laquelle le poinçon 13 est positionné sur la matrice 14. Dans cette configuration de mouillage, le poinçon 13 et la matrice 14 délimitent le logement 15, destiné à recevoir le renfort fibreux 2. Le logement 15 présente alors un volume interne initial, qui correspond au volume du renfort fibreux 2 utilisé pour former la pièce 1 auquel s'ajoute un volume d'air, entre le renfort fibreux 2 et le moule 12, destiné à être rempli par l'alliage métallique 3. Dans l'exemple de réalisation illustré sur les figures, le volume d'air s'étend par exemple entre le renfort fibreux 2 et le poinçon 13.
- une configuration d'imprégnation, dans laquelle le poinçon 13 et la matrice 14 sont rapprochés de manière à réduire le volume interne du logement 15. Dans cette configuration d'imprégnation, le volume interne du logement 15 correspond sensiblement au volume final de la pièce 1.

Le moule 12 peut en outre comprendre un organe d'étanchéité 17, disposé entre la matrice 14 et le poinçon 13. L'organe d'étanchéité 17 est configuré pour étanchéifier le logement 15 du moule 12 lorsque celui-ci est dans sa configuration de mouillage ou dans sa configuration d'imprégnation. A cet effet, l'organe d'étanchéité 17 est choisi pour étanchéifier le logement 15 du moule 12 dans sa configuration de mouillage et maintenir cette étanchéité lorsque le poinçon 13 et la matrice 14 sont amenés dans la configuration d'imprégnation, par exemple par déformation élastique de l'organe d'étanchéité 17. De la sorte, un espace entre le renfort fibreux 2 et le poinçon 13, destiné à recevoir l'alliage métallique 3 dans la configuration de mouillage, peut être ménagé tout en garantissant l'étanchéité du moule 12.

Dans un exemple de réalisation, l'organe d'étanchéité 17 peut comprendre un joint d'étanchéité fixé sur une zone périphérique du poinçon 13 (respectivement de la matrice 14) destinée à venir en contact avec la matrice 14 (respectivement le poinçon 13) lorsque le moule 12 est fermé. Le joint d'étanchéité 17 peut notamment comprendre un joint métallique relativement ductile de manière à permettre la fermeture du moule 12, qui se dilate lorsque la température du moule 12 augmente et permet ainsi d'étanchéifier le moule 12. En variante, le joint d'étanchéité 17 peut être un joint torique fixé sur la matrice 14 (respectivement le poinçon 13) de telle sorte que, lorsque le poinçon 13 est rapporté sur la matrice 14 pour fermer le moule 12, le poinçon 13 (respectivement la matrice 14) vient en contact avec le joint torique et le comprime, étanchéifiant ainsi le logement 15 du moule 12.

De manière optionnelle, le moule 12 peut également comprendre un organe de préchauffage, configuré pour préchauffer le moule 12 à une température définie en fonction de la température de fusion de l'alliage métallique 3 afin d'éviter les gradients thermiques avec l'alliage métallique 3 lors de son introduction dans le moule 12. Cet organe de préchauffage peut alors être indépendant de l'outillage 10 afin de rendre le moule 12 autonome en termes de régulation thermique.

Enfin, l'outillage 10 peut comprendre un actionneur 16, configuré pour appliquer un effort sur le poinçon 13 et/ou sur la matrice 14 de manière à rapprocher le poinçon 13 et la matrice 14 et réduire l'espace entre le renfort fibreux 2 et le moule 12, pour imprégner le renfort fibreux 2 avec l'alliage métallique 3.

L'actionneur 16 peut faire partie intégrante du moule 12 ou être séparé de celui-ci. La variante de réalisation dans laquelle le moule 12 est distinct de l'actionneur 16 présente l'avantage de permettre la fabrication de plusieurs pièces 1 en série avec le même actionneur 16 en utilisant plusieurs moules 12 différents, indépendamment de la durée de refroidissement des pièces 1 dans le moule 12.

Dans un exemple de réalisation, l'actionneur 16 peut notamment comprendre une presse capable d'appliquer une pression allant jusqu'à 2000 tonnes. La pression appliquée sera bien entendu adaptée à la taille et au dimensionnement de l'outillage.

L'invention va être illustrée ici dans le cas de la réalisation d'une pièce 1 comprenant une plaque de dissipation thermique en matériau composite comprenant un renfort fibreux 2 densifié par un alliage métallique 3. L'homme du métier saura ensuite adapter sans effort excessifs les étapes du procédé S pour la réalisation d'autres pièces 1 en matériau composite.

Dans cet exemple, la plaque de dissipation thermique en matériau composite comprend une première face et une deuxième face parallèles et liées entre elles par des bords latéraux. Ici, la première face et la deuxième face correspondent aux faces du parallélépipède dont la surface est la plus grande.

Le logement 15 délimité par la matrice 14 et par le poinçon 13 est alors de forme globalement parallélépipédique. Par conséquent, la matrice 14 et le poinçon 13 présentent chacun une cavité ouverte dont le contour est globalement parallélépipédique, lesdites cavités formant ensemble le logement 15 du moule 12 lorsque la matrice 14 et le poinçon 13 sont assemblés. En variante, seule la matrice 14 (respectivement le poinçon 13) peut comprendre une telle cavité, le poinçon 13 (respectivement la matrice 14) étant alors plane.

Dans une forme de réalisation, la cavité de la matrice 14 comprend une première paroi correspondant à la première surface de la plaque à réaliser, la cavité du poinçon 13 comprend une deuxième paroi correspondant à la deuxième surface, la première paroi et la deuxième paroi s'étendant en regard et parallèlement lorsque le moule 12 est fermé. En d'autres termes, les cavités présentent chacune une direction principale d'extension sensiblement perpendiculaire à la direction de déplacement du poinçon 13 par rapport à la matrice 14, ce qui permet d'optimiser la répartition de l'alliage métallique 3 dans le renfort fibreux 2 et d'homogénéiser les efforts appliqués sur les plus grandes surfaces de la pièce 1.

Dans le cas d'une pièce 1 présentant une forme différente de celle d'une plaque, on comprendra que la forme de la matrice 14 et la forme du poinçon 13 doivent être adaptées. Ainsi, à titre de comparaison, pour un boîtier globalement rectangulaire, la matrice 14 peut par exemple comprendre une cavité dont le contour est globalement parallélépipédique, tandis que le poinçon 13 comprend une forme complémentaire en saillie configurée pour pénétrer dans la cavité de la matrice 14.

### Procédé S de fabrication

Afin de fabriquer une pièce 1 en matériau composite, le procédé S de l'invention comprend une première étape S1 au cours de laquelle le moule 12 est ouvert pour être amené dans sa configuration initiale, en écartant la matrice 14 du poinçon 13 de manière à dégager le logement 15.

Au cours d'une deuxième étape S2, le renfort fibreux 2 destiné à former la pièce 1 est placé dans le logement 15 du moule 12, sur la matrice 14.

Le cas échéant, le renfort fibreux 2 peut être traité préalablement (étape S20) afin de modifier sa perméabilité et d'améliorer l'imprégnation de l'alliage métallique 3.

Dans l'exemple d'une plaque de dissipation thermique, le renfort fibreux 2 peut présenter une forme globalement parallélépipédique. Par ailleurs, le renfort fibreux 2 peut comprendre plusieurs plis de fibres superposés, typiquement entre un et dix plis de fibres, de préférence entre deux et huit plis de fibres, typiquement quatre à huit plis de fibres. De plus, afin de rendre la plaque thermiquement et électriquement conductrice, les plis peuvent comprendre des fibres de carbone.

Dans une forme de réalisation, un grillage métallique peut être placé entre le poinçon 13 et le renfort fibreux 2 (étape S21), et le cas échéant entre la matrice 14 et le renfort fibreux 2. L'objectif de ce grillage métallique est d'homogénéiser la répartition de l'alliage métallique 3 sur et dans le renfort fibreux 2, en créant une surface ajourée qui limite les contraintes susceptibles de gêner la circulation de l'alliage fondu, ce qui facilite la progression de l'alliage fondu autour du renfort fibreux 2.

Au cours d'une troisième étape S3, l'outillage 10 peut être amené vers sa configuration de mouillage en rapportant le poinçon 13 sur la matrice 14 afin de fermer le logement 15. Dans une forme de réalisation, l'outillage 10 est fermé de façon étanche afin d'empêcher toute fuite de matière en dehors du moule 12.

L'étanchéité du moule 12 fermé peut être obtenue à l'aide de l'organe d'étanchéité.

Dans la configuration de mouillage, le moule 12 est fermé de telle sorte qu'un espace soit ménagé entre le renfort fibreux 2 et le moule 12, tout en assurant l'étanchéité du moule 12. Le volume de cet espace interne correspond au volume d'alliage métallique 3 que l'on souhaite imprégner dans le renfort fibreux 2, de manière à former la pièce 1 en matériau composite. Ce volume correspond globalement au volume interne au renfort fibreux 2, c'est-à-dire au volume d'air présent entre les fibres du renfort.

De manière générale, la hauteur *h* est comprise entre quelques dixièmes de millimètres pour une épaisseur e comprise entre 1 et 2 mm et quelques millimètres pour une épaisseur e supérieure à 2 mm. Par exemple, pour un renfort fibreux 2 présentant une épaisseur *e* (dimension suivant l'axe d'application de l'effort par l'actionneur 16) d'environ deux millimètres, l'espace entre la surface supérieure du renfort fibreux 2 et le poinçon 13 présente une hauteur *h* (dimension suivant l'axe d'application de l'effort par l'actionneur 16) de l'ordre d'un millimètre.

On comprendra bien entendu que le volume de l'espace dépend du taux de fibres que l'on souhaite obtenir pour la pièce 1. Par exemple, la pièce 1 peut comprendre entre 30% et 70% de matrice métallique 3 pour 70% à 30% de fibres (soit un taux volumique de fibres de 30 à 70%), de préférence entre 35% et 60% en poids de matrice métallique 3 pour 65% à 40% (soit un taux volumique de fibres de 40 à 65%).

Au cours d'une quatrième étape S4, l'alliage métallique 3 est chauffé dans un récipient 18 adapté jusqu'à atteindre sa température de fusion, afin de permettre son introduction dans le moule 12 sous forme liquide.

Dans une variante de réalisation, le poinçon 13 et/ou la matrice 14 sont préchauffés S40 afin de limiter les gradients thermiques et d'éviter un éventuel choc qui pourrait modifier la qualité métallurgique de la pièce 1 obtenue. Par exemple, le poinçon 13 et/ou la matrice 14 peuvent être préchauffés à une température comprise entre 200°C et 600°C. La température de préchauffage peut le cas échéant être adaptée en fonction de la température de fusion de l'alliage métallique 3. Ainsi, pour un alliage à base d'aluminium ou de magnésium, le poinçon 13 et/ou la matrice 14 peuvent être préchauffés à une température de l'ordre de 500°C.

Le préchauffage S40 du moule 12 peut être effectué de manière conventionnelle, par exemple par induction.

Dans une variante de réalisation, le préchauffage S40 du moule 12 (poinçon 13 et/ou matrice 14) peut être effectué préalablement à l'introduction du renfort fibreux 2 dans le moule 12, soit préalablement à la deuxième étape S2 du procédé S.

Au cours d'une cinquième étape S5, l'alliage métallique 3 est introduit dans le moule 12 fermé par l'orifice traversant 11 par l'orifice traversant 11.

Dans une première forme de réalisation, l'alliage métallique 3 pénètre par gravité dans le moule 12. Sa répartition sur et dans le renfort fibreux 2 peut être améliorée, optionnellement, par le grillage métallique. Le moule 12 est alors à pression atmosphérique.

En variante, le moule 12 peut être mis sous vide S50 afin d'améliorer la répartition de l'alliage métallique 3 dans le renfort fibreux 2 et d'éviter la formation de bulles, notamment lorsque le renfort fibreux 2 présente une épaisseur importante ou que l'utilisation ultérieure de la pièce 1 requiert d'excellentes performances mécaniques. Par exemple, la cavité interne du moule 12 peut être amenée à une pression de l'ordre de 20 bars. A cet effet, le moule 12 peut alors comprendre un évent (non illustré sur les figures) débouchant dans le logement 15 du moule 12 et en communication fluidique avec une pompe configurée pour mettre le moule 12 sous vide.

Suite à cette étape S5, le moule 12 contient alors le renfort fibreux 2, le cas échéant un grillage métallique sur et/ou sous le renfort fibreux 2, et de l'alliage métallique 3 fondu réparti autour du renfort fibreux 2.

Au cours d'une sixième étape S6, un effort est appliqué à l'aide de l'actionneur 16 sur le moule 12 (c'est-à-dire sur le poinçon 13 et/ou la matrice 14) de manière à amener le moule 12 dans sa configuration d'imprégnation en rapprochant le poinçon 13 de la matrice 14. Ce rapprochement du poinçon 13 et de la matrice 14 a pour effet de forcer l'alliage métallique 3 à s'infiltrer dans les aspérités du renfort fibreux 2 en réduisant le volume interne du logement 15 du moule 12.

L'effort peut être appliqué par l'actionneur 16 dans une direction sensiblement perpendiculaire à un plan principal d'extension du renfort fibreux 2. Typiquement, pour une pièce 1 comprenant une plaque s'étend généralement dans un plan d'extension P, il est possible d'appliquer un effort suivant une direction normale à ce plan d'extension P. L'effort appliqué par l'actionneur 16 est alors plus homogène que lorsqu'il est appliqué suivant un axe compris dans le plan d'extension P, et permet ainsi d'imprégner de façon plus homogène l'alliage métallique 3 dans le renfort fibreux 2.

De préférence, les étapes S5 et S6 sont réalisées suffisamment rapidement pour que l'imprégnation du renfort fibreux 2 par l'alliage métallique 3 à l'aide de l'actionneur 16 soit achevée avant que l'alliage métallique 3 n'ait commencé à durcir.

Par ailleurs, l'étape S6 d'imprégnation du renfort fibreux 2 par l'alliage métallique 3 peut être effectuée, de manière optionnelle, sous vide.

Suite à cette étape S6, l'alliage métallique 3 est imprégné de façon homogène dans le renfort fibreux 2.

Au cours d'une septième étape S7, la pièce 1 est refroidie. Le refroidissement peut avoir lieu à l'air libre dans l'outillage 10. Par exemple, le moule 12 peut être extrait de l'outillage 10 puis laissé refroidir pendant qu'un moule 12 différent est utilisé dans l'outillage 10 pour la réalisation d'une autre pièce 1.

On comprendra bien entendu que le mode de refroidissement de la pièce 1 est choisi en fonction de la qualité métallurgique que l'on souhaite obtenir pour la pièce 1. Le cas échéant, il est par exemple possible de réaliser une trempe de la pièce 1.

Suite à l'étape S7 de refroidissement, l'alliage métallique 3 est réparti de manière homogène dans le renfort fibreux 2, ce qui confère à la pièce 1 ainsi obtenue de bonnes propriétés mécaniques, et des propriétés thermiques et conductrices pouvant être ajustées en fonction du matériau utilisé pour l'alliage métallique 3. En particulier, l'invention permet de générer un réseau de pontages électriques et thermiques à travers un renfort fibreux 2 afin de dissiper et/ou conduire de l'énergie à travers la pièce 1 obtenue, en minimisant les résistances de contact entre les fibres du renfort fibreux 2 et l'alliage métallique 3 de l'alliage métallique 3 afin d'optimiser les passages de flux.

Enfin, la pièce 1 peut subir des étapes de finition, telles qu'un usinage, rivetage, collage, soudage, etc.

## Revendications

1. Procédé de fabrication (S) d'une pièce (1) dans un matériau composite comprenant un renfort fibreux (2) densifié par une matrice métallique (3), par exemple d'une pièce (1) d'un moteur aéronautique, le procédé de fabrication (S) comprenant les étapes suivantes :
- ouvrir (S1) un outillage (10) comprenant une partie support (14) et une partie moulante (13), en écartant la partie moulante (13) de la partie support (14) afin de délimiter avec la partie support (14) un logement (15),
- placer un renfort fibreux (2) dans le logement (15) de l'outillage (10) (S2),
- fermer (S3) de façon étanche l'outillage (10), en fixant la partie moulante (13) sur la partie support (14) et en ménageant un espace entre le renfort fibreux (2) et les parties de l'outillage (10),
- faire fondre la matrice métallique (3) (S4),
- introduire du métal fondu (3) dans l'outillage (10) (S5) de manière à remplir l'espace entre le renfort fibreux (2) et les parties (13, 14) d'outillage (10),
- appliquer un effort (S6) sur la partie moulante (13) et/ou sur la partie support (14) de manière à rapprocher la partie moulante (13) et la partie support (14) et réduire l'espace entre le renfort fibreux (2) et les parties (13, 14) de l'outillage (10), pour imprégner le renfort fibreux (2) avec le métal fondu (3).

2. Procédé de fabrication (S) selon la revendication 1, dans lequel la partie support et/ou la partie moulante (13) sont préchauffés à une température de préchauffage inférieure ou égale à la température de fusion de la matrice métallique (3), de préférence entre environ 200°C et 600°C.

3. Procédé de fabrication (S) selon la revendication 2, dans lequel la partie support (14) et/ou la partie moulante (13) sont préchauffées, la partie moulante (13) étant préchauffée à une température supérieure à la température de la partie support (14).

4. Procédé de fabrication (S) selon l'une des revendications 1 à 3, comprenant en outre une étape (S21) au cours un grillage métallique est placé entre la partie support (14) et le renfort fibreux (2) et/ou entre la partie moulante (13) et le renfort fibreux (2), préalablement à la fermeture (S3) de l'outillage (10).

5. Procédé de fabrication (S) selon l'une des revendications 1 à 4, comprenant en outre une étape de traitement (S20) du renfort fibreux (2) adapté pour accroître la perméabilité des fibres formant le renfort fibreux (2).

6. Procédé de fabrication (S) selon la revendication 5, dans lequel l'étape de prétraitement (S20) comprend une étape de désensimage des fibres formant le renfort fibreux (2) et une étape de traitement chimique par sel de fluorure, par dépôt de carbure ou par dépôt de nickel.

7. Procédé selon l'une des revendications 1 à 6, dans lequel l'étape de remplissage (S5) de l'espace entre le renfort fibreux (2) et les parties (13, 14) de l'outillage (10) et/ou l'étape d'imprégnation (S6) du renfort fibreux (2) avec la matrice métallique (3) sont réalisées sous vide.

8. Moule (12) pour la fabrication d'une pièce (1) selon l'une des revendications 1 à 7, comprenant :
- une partie support (14),
- une partie moulante (13), mobile par rapport à la partie support (14) afin de délimiter avec la partie support (14) un logement (15) adapté pour recevoir un renfort fibreux (2),
- un organe d'étanchéité (17), disposé entre la partie support (14) et la partie moulante (13), adapté pour étanchéifier l'outillage (10) lorsque la partie moulante (13) est fixée sur la partie support (14) tout en ménageant un espace entre le renfort fibreux (2) et les parties (13, 14) de l'outillage (10), et
- un orifice traversant (11), formé dans la partie moulante (13) ou dans la partie support (14) et débouchant dans le logement (15), ledit orifice traversant (11) étant adapté pour permettre l'introduction d'un métal fondu (3) dans le logement (15), et
- un évent débouchant dans le logement (15) du moule (12) et configuré pour être mis en communication fluidique avec une pompe à vide.

9. Outillage (10) comprenant :
- un moule (12) selon la revendication 8, et
- un actionneur (16), configuré pour appliquer un effort sur la partie moulante (13) et/ou sur la partie support (14) du moule (12) de manière à rapprocher la partie moulante (13) et la partie support et réduire l'espace entre le renfort fibreux (2) et les parties de l'outillage (10), pour imprégner le renfort fibreux (2) avec le métal fondu (3).

## Patentansprüche

1. Verfahren zur Herstellung (S) eines Teils (1) aus einem Verbundstoff, umfassend eine von einer metallischen Matrix (3) verdichtete faserige Verstärkung (2), beispielsweise eines Teils (1) eines Motors eines Luftfahrzeugs, wobei das Herstellungsverfahren (S) die folgenden Schritte umfasst:
- Öffnen (S1) eines Werkzeugs (10), umfassend einen tragenden Teil (14) und einen formenden Teil (13), durch Beabstanden des formenden Teils (13) von dem tragenden Teil (14), um mit dem tragenden Teil (14) eine Aufnahme (15) zu begrenzen,
- Platzieren einer faserigen Verstärkung (2) in die Aufnahme (15) des Werkzeugs (10) (S2),
- dichtes Verschließen (S3) des Werkzeugs (10) durch Fixieren des formenden Teils (13) auf dem tragenden Teil (14) und durch Ausbilden eines Raums zwischen der faserigen Verstärkung (2) und den Teilen des Werkzeugs (10),
- Schmelzen der metallischen Matrix (3) (S4),
- Einleiten des geschmolzenen Metalls (3) in das Werkzeug (10) (S5) derart, dass der Raum zwischen der faserigen Verstärkung (2) und den Teilen (13, 14) des Werkzeugs (10) gefüllt wird,
- Ausüben einer Kraft (S6) auf den formenden Teil (13) und/oder auf den tragenden Teil (14) derart, dass der formenden Teil (13) und der tragenden Teil (14) angenähert werden und der Raum zwischen der faserigen Verstärkung (2) und den Teilen (13, 14) des Werkzeugs (10) reduziert wird, um die faserige Verstärkung (2) mit dem geschmolzenen Metall (3) zu imprägnieren.

2. Herstellungsverfahren (S) nach Anspruch 1, wobei der tragende Teil und/oder der formende Teil (13) auf eine Vorheiztemperatur von unter oder gleich der Schmelztemperatur der metallischen Matrix (3) vorgeheizt werden, vorzugsweise zwischen zirka 200°C und 600°C.

3. Herstellungsverfahren (S) nach Anspruch 2, wobei der tragende Teil (14) und/oder der formende Teil (13) vorgeheizt werden, wobei der formende Teil (13) auf eine höhere Temperatur als die Temperatur des tragenden Teils (14) vorgeheizt wird.

4. Herstellungsverfahren (S) nach einem der Ansprüche 1 bis 3, umfassend ferner einen Schritt (S21), bei dem ein metallisches Gitter zwischen dem tragenden Teil (14) und der faserigen Verstärkung (2) und/oder zwischen dem formenden Teil (13) und der faserigen Verstärkung (2) vor dem Schließen (S3) des Werkzeugs (10) platziert wird.

5. Herstellungsverfahren (S) nach einem der Ansprüche 1 bis 4, umfassend ferner einen Bearbeitungsschritt (S20) der faserigen Verstärkung (2), der geeignet ist, die Durchlässigkeit der Fasern, welche die faserige Verstärkung (2) bilden, zu erhöhen.

6. Herstellungsverfahren (S) nach Anspruch 5, wobei der Vorbehandlungsschritt (S20) einen Entschmälzungsschritt der Fasern, welche die faserige Verstärkung (2) bilden, und einen chemischen Bearbeitungsschritt mit Fluoridsalz durch Aufbringen von Carbid oder durch Aufbringen von Nickel umfasst.

7. Verfahren nach einem der Ansprüche 1 bis 6, wobei der Füllschritt (S5) des Raums zwischen der faserigen Verstärkung (2) und den Teilen (13, 14) des Werkzeugs (10) und/oder der Imprägnierschritt (S6) der faserigen Verstärkung (2) mit der metallischen Matrix (3) im Vakuum durchgeführt werden.

8. Form (12) für die Herstellung eines Teils (1) nach einem der Ansprüche 1 bis 7, umfassend:
- einen tragenden Teil (14),
- einen in Bezug auf den tragenden Teil (14) beweglichen formenden Teil (13), um mit dem tragenden Teil (14) eine Aufnahme (15) zu begrenzen, die für die Aufnahme einer faserigen Verstärkung (2) geeignet ist,
- ein zwischen dem tragenden Teil (14) und dem formenden Teil (13) angeordnetes Abdichtungsorgan (17), das zur Abdichtung des Werkzeugs (10) geeignet ist, wenn der formende Teil (13) auf dem tragenden Teil (14) befestigt ist, bei Ausbildung eines Raums zwischen der faserigen Verstärkung (2) und den Teilen (13, 14) des Werkzeugs (10), und
- eine Durchgangsöffnung (11), die in dem formenden Teil (13) oder in dem tragenden Teil (14) ausgebildet ist und in die Aufnahme (15) ausmündet, wobei die Durchgangsöffnung (11) geeignet ist, um das Einleiten eines geschmolzenen Metalls (3) in die Aufnahme (15) zu erlauben, und
- eine Entlüftungsöffnung, die in die Aufnahme (15) der Form (12) ausmündete und konfiguriert ist, um mit einer Vakuumpumpe in Fluidkommunikation versetzt zu sein.

9. Werkzeug (10), umfassend:
- eine Form (12) nach Anspruch 8, und
- einen Aktuator (16), der konfiguriert ist, um eine Kraft auf den formenden Teil (13) und/oder auf den tragenden Teil (14) der Form (12) derart auszuüben, dass der formende Teil (13) und der tragende Teil angenähert werden und der Raum zwischen der faserigen Verstärkung (2) und den Teilen des Werkzeugs (10) reduziert wird, um die faserige Verstärkung (2) mit dem geschmolzenen Metall (3) zu imprägnieren.

## Claims

1. A manufacturing method (S) for a part (1) made of a composite material comprising a fibrous reinforcement (2) densified by a metal matrix (3), for example, a part (1) of an aeronautical engine, the manufacturing method (S) comprising the following steps:
- opening (S1) tooling (10) comprising a support portion (14) and a molding portion (13), by separating the molding portion (13) from the support portion (14) to delimit with the support portion (14) a recess (15),
- placing a fibrous reinforcement (2) in the recess (15) of the tooling (10) (S2),
- closing (S3) the tooling (10) in a sealed manner by attaching the molding portion (13) on the support portion (14) and by providing a space between the fibrous reinforcement (2) and the portions of the tooling (10),
- melting the metal matrix (3) (S4),
- introducing melted metal (3) into the tooling (10) (S5) so as to fill the space between the fibrous reinforcement (2) and the portions (13, 14) of the tooling (10),
- applying a force (S6) on the molding portion (13) and/or on the support portion (14) so as to move the molding portion (13) closer to the support portion (14) and reduce the space between the fibrous reinforcement (2) and the portions (13, 14) of the tooling (10), to impregnate the fibrous reinforcement (2) with the melted metal (3).

2. The manufacturing method (S) according to claim 1, wherein the support portion and/or the molding portion (13) are preheated to a preheating temperature less than or equal to the fusion temperature of the metal matrix (3), preferably between approximately 200°C and 600°C.

3. The manufacturing method (S) according to claim 2, wherein the support portion (14) and/or the molding portion (13) are preheated, the molding portion (13) being preheated to a temperature greater than the temperature of the support portion (14).

4. The manufacturing method (S) according to one of claims 1 to 3, further comprising a step (S21) during which a metal grid is placed between the support portion (14) and the fibrous reinforcement (2) and/or between the molding portion (13) and the fibrous reinforcement (2), prior to the closure (S3) of the tooling (10).

5. The manufacturing method (S) according to one of claims 1 to 4, further comprising a treatment step (S20) of the fibrous reinforcement (2) adapted to increase the permeability of the fibers forming the fibrous reinforcement (2).

6. The manufacturing method (S) according to claim 5, wherein the pretreatment step (S20) comprises a scouring step of the fibers forming the fibrous reinforcement (2) and a chemical treatment step by fluoride salts, by carbide deposition or by nickel deposition.

7. The manufacturing method according to one of claims 1 to 6, wherein the filling step (S5) of the space between the fibrous reinforcement (2) and the portions (13, 14) of the tooling (10) and/or the impregnation step (S6) of the fibrous reinforcement (2) with the metal matrix (3) are carried out under vacuum.

8. A mold (12) for the manufacture of a part (1) according to one of claims 1 to 7, comprising:
- a support portion (14),
- a molding portion (13), movable with respect to the support portion (14) to delimit with the support portion (14) a recess (15) adapted to receive a fibrous reinforcement (2),
- a sealing member (17), disposed between the support portion (14) and the molding portion (13) adapted to seal the tooling (10) when the molding portion (13) is attached on the support portion (14) while providing a space between the fibrous reinforcement (2) and the portions (13, 14) of the tooling (10), and
- a through opening (11), formed in the molding portion (13) or in the support portion (14) and leading into the recess (15), said through opening (11) being adapted to allow the introduction of melted metal (3) into the recess (15), and
- a vent leading into the recess (15) of the mold (12) and configured to be put into fluid communication with a vacuum pump.

9. Tooling (10) comprising:
- a mold (12) according to claim 8, and
- an actuator (16), configured to apply a force on the molding portion (13) and/or on the support portion (14) of the mold (12) so as to move the molding portion (13) closer to the support portion and reduced the space between the fibrous reinforcement (2) and the portions of the tooling (10), to impregnate the fibrous reinforcement (2) with the melted metal (3).
